# EUROPEAN PATENT SPECIFICATION

(11) **EP 2 543 042 B1**
(45) Date of publication and mention of the grant of the patent: **04.10.2017**
(21) Application number: 11715626.5
(22) Date of filing: 23.02.2011
(51) Int. Cl.: G21C 3/02, G21C 21/02, B22F 7/00, B32B 15/04, C04B 37/00, C22C 1/05, C23C 12/00, C23C 24/08

(54) **FUEL COMPONENT AND A METHOD FOR PRODUCING A FUEL COMPONENT**
BRENNELEMENT UND VERFAHREN ZUR HERSTELLUNG DESSELBEN
ÉLÉMENT DE COMBUSTIBLE ET PROCÉDÉ DE FABRICATION D'UN TEL ÉLÉMENT

(30) Priority: 01.03.2010 SE 1050189
(43) Date of publication of application: 09.01.2013
(73) Proprietor: Westinghouse Electric Sweden AB, 721 63 Västerås (SE)
(72) Inventor: HALLSTADIUS, Lars, S-725 92 Västerås (SE); BACKMAN, Karin, S-722 46 Västerås (SE); REBENSDORFF, Björn, S-722 10 Västerås (SE); WIDEGREN, Hans, S-723 41 Västerås (SE)
(74) Representative: Berglund, Stefan
(86) International application number: PCT/SE2011/050204
(87) International publication number: WO 2011/108975

(56) References cited:
- EP-A1- 1 249 844
- WO-A1-94/14164
- WO-A1-98/53940
- DE-A1- 19 834 216
- GB-A- 928 517
- JP-A- 4 187 739
- JP-A- 11 012 758
- US-A- 3 249 509
- US-A- 4 745 033
- US-A- 5 268 235
- US-A- 5 279 909
- US-A1- 2004 195 296
- "Porous sintered silicon carbide body - prepd. by calcining moulded silicon carbide having concn. gradient of specified element e.g. boron", WPI / THOMSON,, vol. 1986, no. 40, 26 August 1986 (1986-08-26), XP002647103,
- "Homogeneous ore sintering - by fuel content control in the binary layers", WPI / THOMSON,, vol. 1973, no. 39, 28 December 1972 (1972-12-28), XP002647105,

## Description

### TECHNICAL FIELD

The present invention relates to a fuel component according to the preamble of claim 1, see US-3,249,509.

The present invention relates also to a method for manufacturing of a fuel component according to above.

### PRIOR ART

Nuclear fuel for fission reactors comprises fuel components containing a fissile substance, such as U-235. The fuel components need to be protected from interaction from an outer surrounding. In boiling water reactors and pressure water reactors the fuel component is completely enclosed in corrosion resistant cladding tubes of a zirconium alloy with a low neutron absorption cross-section. The function of the cladding tubes is to enclose the fuel components and thereby prevent interaction between an outer surrounding and the fissile substance. The interaction can comprise a reaction between the fuel component and the outer surrounding or a contamination of the outer surrounding in that substances, for example substances in gaseous state, formed in the fuel component streams out from the fuel component to the outer surrounding.

The fuel component in commercial fission reactors comprises usually cylindrical pellets of UO₂, where the concentration of the fissile substance U-235 is lower than 5 %, and where the remaining composition is U-238. The cladding tube with the enclosed fuel components is positioned in a fuel element that thereafter is inserted in the reactor core and is irradiated, wherein the fuel components generates energy and neutrons. A fuel element is usually irradiated during four to six years before it is replaced by a new fuel element. The irradiation is divided into several fuel cycles. The duration of a fuel cycle is usually about one year, but can also be to two years.

Non-irradiated fuel components have a higher produced power during the first fuel cycle in comparison with the subsequent fuel cycles, because the concentration of the fissile substance is at highest at the beginning of the irradiation. For safety reason, the produced power in the fuel component is limited so that it does not exceed a certain level. In order to limit the produced power neutron absorbers are used, which absorb neutrons. Thereby, the fission process is mitigated and the produced power is reduced. Neutron absorbers can be mixed into the fuel component or surround the fuel component and provide a local reduction of the power at the fuel component. In order to limit the produced power during the first fuel cycle without limiting the produced power during the subsequent fuel cycles, so called burnable neutron absorbers are used, which have the function to absorb neutrons at the same time as they are transformed into substances with a lower neutron absorption capability. Examples of burnable neutron absorbing materials are gadolinium and boron. By using burnable neutron absorbers, the produced power in the fuel component can be limited during the first fuel cycle while the power from the burnable neutron absorber on the produced power during the subsequent cycles is small or negligible.

Fuel components with neutron absorbers can be manufactured by either mixing neutron absorbing material into the fuel component or by applying the neutron absorbing material as a layer on the surface of the fuel component. Intermixture of the neutron absorbing material is only possible for certain neutron absorbers. Known methods for coating neutron absorbing material on the surface of fuel components comprise sensitive processes that require vacuum and are expensive. Another problem with a layer of an absorbing material is to assure that the layer of the neutron absorbing material remains on the surface of the fuel component. During irradiation of the fuel element high temperatures arises in the fuel component. For example in boiling water reactors and pressurized water reactors temperatures of up to 1500°C arises in the fuel component during normal operational conditions. The transition from room temperature to high temperatures between the fuel cycles creates stresses between material with different thermal and elastic properties, wherein the layer of neutron absorbing material can crack and fall off. The layer of neutron absorbing material can also peel off or be abraded off at or before introduction into the fuel rods. If the layer of neutron absorbing material on the fuel component entirely or partly is missing or if the neutron absorbing material has been displaced within the fuel rod, for example during reactor operation, the produced power in the fuel element is affected, which results in that the produced power locally can exceed permitted values. It may be necessary to stop the reactor and exchange fuel element with the defective fuel components, which results in great losses in form of missing energy production and costs for repairing of the fuel element.

Fuel components can at leakage of the cladding tubes come into contact with an outer surrounding, such as light water in pressurized and boiling water reactors. The outer surrounding can react with the fuel component at so called fuel failures, wherein the material in the fuel component contaminates the outer surrounding in the reactor and the function of the fuel component ceases or deteriorates. At minor fuel failures, the outer surrounding is contaminated mainly by gases formed during the fission process. A contamination of the outer surrounding can result in maintenance personal at the reactor being exposed to increased irradiation doses at maintenance work. It may also be necessary to stop the reactor and replace the fuel element with the leaking cladding tubes. Fuel failures result in great costs in form of lacking production at operational stop and by costs for repairing the failing fuel element.

A technique for treatment of burned out nuclear fuel for further storage is described in EP-1249844. In the document burned out nuclear fuel is treated with powder of aluminum and boron that is pressed by Cold Isostatic Pressing (CIP) and then sintered together by means of plasma sintering.

### SUMMARY OF THE INVENTION

The object of the present invention is to provide a fuel component with improved properties.

This object can be achieved with the initially defined component that comprises the features that are defined in the characterizing part of claim 1.

The fuel component obtains the above mentioned object by means of the intermediate layer between the core and the layer. The intermediate layer comprises or consists of a mixture of the first material and the second material.

The fuel component regards a component that is adapted to generate energy and neutrons. The fuel component comprises a core, which has the function to generate energy and neutrons, and a layer that at least partly encloses the core. The core of the component consists of the first material, which comprises a fissile substance. A fissile substance relates to a material that has properties to maintain the chain reaction in a fission reactor. The fissile substance in the fuel component generates energy and neutrons when it is irradiated during reactor operation, wherein the fuel component obtains a high temperature. The layer of the component consists of the second material.

The intermediate layer is a layer between the core and the layer that provides a transition of the properties from the first material to the second material. The intermediate layer comprises a step-by-step or gradual transition of the concentration of the first and the second material. The intermediate layer has a material gradient, which means that the concentration of the first material and the second material in the intermediate layer is greater than zero. The material gradient comprises a concentration change in comparison with the core and in comparison with the layer. The material gradient can comprise a homogenous mixture of the first and the second material. The material gradient can also comprise a change within the intermediate layer of the proportion between the concentration of the first and the second material. Thereby, the material gradient can be adjusted in regards to material properties, such as in regards to temperature expansion, of the first and the second material in order to obtain good material properties of the fuel component. By means of the material gradient a transition is formed between the first material in the core and the second material in the layer, which provides a strong adhesion between the layer and the core. The material gradient in the intermediate layer results in a reduction of internal stresses in the components formed from thermal and elastical differences between the first and the second material. Thereby, an improved adhesion of the layer to the core is obtained, which provides the component with an improved functionality.

According to an embodiment of the invention, the material gradient comprises a successive decrease of the concentration of the first material from the core to the layer and a successive increase of the concentration of the second material from the core to the layer. Thereby, the material gradient is arranged in order to provide a gradual transition of the properties from the first material to the second material, and vice verse.

According to an embodiment of the invention, the fuel component is manufactured by means of sintering, which provides the component with a good sintering together of the first material with the second material. The sintering can involve or be combined with an applied pressure and/or an elevated temperature. The sintering method assures that several material properties, such as grain size and porosity, of the sintered component can be controlled within a wide interval.

According to an embodiment of the invention the layer is arranged to absorb neutrons. Neutron absorbing capability relates, in this context, to the capability of a material, over suitable neutron energy spectrum for a fission reactor, to capture neutrons and thereby reduce the reactivity of the reactor. Thereby, the generated power in the fuel component can be reduced.

According to an embodiment of the invention, the layer of the fuel component consists of a substance chosen from the group of Hf, B, ZrB₂, In, Cd, Hg, Ag, Gd, Er, BₓC_{y}, BₓN_{y}, BₓO_{y}, mixture thereof, and of possible balance. Substances from this group have neutron absorbing properties suitable for the fuel component. Within the scope of the invention, it is possible to combine which ever of these neutron absorbing substances of the layer with any of above mentioned substances of the core, for example a layer of BₓC_{y}, such as B₄C, and a core of UO₂, a layer of ZrB₂ and a core of UO₂, etcetera.

According to an embodiment of the invention, the layer is arranged to protect the core from an outer surrounding. Thereby, core of the fuel component is protected from interaction with the outer surrounding. Thereby, the consequences at contact between the fuel component and the outer surrounding are reduced. The protecting function of the layer of the fuel component provides a redundancy to the protection of the cladding tubes against the outer surrounding. Alternatively, the redundant protection of the fuel component can allow the protective properties of the cladding tubes to be reduced, for example by reducing the thickness of material of the cladding tubes. The protective effect of the cladding tubes can alternatively be replaced completely by the protection of the layer. Thereby, an improved heat transfer from the core of the component to the outer surrounding is obtained, which results in an increase of the output power of the fission reactor.

The outer surrounding comprises the surrounding around the fuel component, which mainly comprises a moderating and cooling medium. At reactor operation, the outer surrounding comprises a reactive environment that at contact reacts with the fuel component.

The protection of the core results in the outer surrounding, for example the moderator of a light water fission reactor, not being contaminated by the first material. By preventing the outer surrounding from being contaminated, the exposure of irradiation of the maintenance personal at maintenance work at the reactor is reduced. The costs for reactor stop and replacement of leaking fuel elements can also be avoided.

According to an embodiment of the invention, the layer is essentially impermeable to substance in gaseous state, at least helium. Since the layer is essentially impermeable to gas, substances in gaseous state that are formed in the fuel component can be maintained in the interior of the fuel component. Thereby, no contamination of the outer surrounding with substances in gaseous states formed in the fuel component occurs.

According to an embodiment of the invention, the layer is essentially corrosion resistant in an environment of the fission reactor. Essentially corrosion resistant means that the layer is chemically inert or essentially chemically inert, and that its protective effect thereby is maintained at exposure to the outer surrounding in a fission reactor. By the corrosion resistance of the layer, the core of the fuel component is protected from being influenced by the outer surrounding. Thereby, the integrity and function of the fuel components are assured.

According to an embodiment of the invention, the pore volume of the porosity in the layer of the fuel component is significantly less than the pore volume of the porosity in the core. The porosity of the core is used to maintain at least partly formed gases within the grains of the material structure. By the lower porosity of the layer, desirable material properties of the layer are obtained, such as a high density, which provides the layer with a separating effect that protects the core from the outer surrounding and prevents substances in gaseous state formed in the core from escaping out of the fuel component. Thereby, the integrity and function of the fuel component are assured, and the risk that the outer surrounding is contaminated by the first material or by substances in gaseous state formed in the core is reduced.

According to an embodiment of the invention, the layer of the fuel component comprises at least one of a metallic material and a ceramic material. Certain materials from these groups possess properties that are particularly suitable in reactor environments. For example, certain ceramic materials, such as SiC, possess a high corrosion resistance, a high hardness and are heat resistant. For example, certain metallic materials, such as Zr, have a high corrosion resistance and good mechanical properties.

According to an embodiment of the invention, the layer of the fuel component consists of at least one substance chosen from the group of Ti, Zr, Al, Fe, Cr, Ni, SiC, SiN, ZrO₂. Al₂O₃, mixtures thereof, and possible balance. Substances from this group have properties that are advantageous for the layer of the fuel component.

According to an embodiment of the invention, the layer fully encloses the core. Thereby, the core is fully protected and separated from the outer surrounding.

An object with the present invention is also to provide a method for manufacturing of a fuel component.

This object is obtained by means of a method as defined in claim 13.

Such a method comprises feeding of the first material and the second material to a space of a tool in such a way that the second material at least partly encloses the first material, and thereafter sintering together the first and the second material to the fuel component, wherein an intermediate layer between the core and the layer is formed, and wherein the intermediate layer has a material gradient that comprises a decrease of the concentration of the first material from the core to the layer and an increase of the concentration of the second material from the core to the layer. The tool for the method comprises a tool part with a space adapted to be fed with material for sintering.

According to an embodiment of the invention, an intermediate zone between an inner part of the space and an outer part of the space is formed when feeding the first material and the second material, and wherein the intermediate zone comprises a decrease of the concentration of the first material from the inner part of the space to the outer part of the space and an increase of the concentration of the second material from the inner part of the space to the outer part of the space. The intermediate zone comprises an area between the inner part of the space and the outer part of the space consisting on the first material and the second material. The intermediate zone comprises a material gradient, which means that the first and the second material step-by-step or gradually are transferred into each other. After the materials have been fed to the space, the first material is joined with the second material by sintering in such a way that the layer, the core and the intermediate layer are formed.

According to an embodiment of the invention, the space is vibrated in such a way that the first material and the second material are brought together and form the intermediate zone. The space is vibrated after the first material and the second material have been fed into the space but before the sintering. Thereby, a material gradient of the first material and the second material arises between the inner part of the space and the outer part of the space.

According to an embodiment of the invention the first material is fed in powder form. A material in powder form relates to a material in solid state comprising a large number of particles with small grain size. The powder can possibly be free flowing, which means that the powder is easily deformed when it is subjected to mechanical stresses. Thereby, the powder can fill out the space in the tool for the sintering. By using a material in powder form the method when forming the intermediate zone is facilitated.

According to an embodiment of the invention, the second material is fed in powder form.

According to an embodiment of the invention, the space is divided by an inner pipe that comprises an inner part, wherein the space is divided by an outer pipe that comprises an outer part, wherein an intermediate part is formed between the outer pipe and the inner pipe. The inner part is adapted to be fed with the first material that after sintering forms the core of the fuel component. The outer part is adapted to be fed with the second material that after sintering forms the layer of the fuel component. The intermediate part forms after sintering the intermediate layer of the fuel component.

According to an embodiment of the invention, the intermediate located part is fed with a mixture of the first material and the second material for creating the intermediate zone. The material in the intermediate part forms after sintering the intermediate layer of the fuel component.

According to an embodiment of the invention, the intermediate part is divided into divisions of at least an intermediate pipe, wherein the divisions are fed with mixtures of different proportions between the concentration of the first material and the second material. By dividing the space between the inner pipe and the outer pipe in two or more divisions, the composition of the first and the second material in the divisions can be influenced so that the intermediate layer formed after sintering obtains a material gradient that provides the layer with a good adhesion to the core.

### BRIEF DESCRIPTION OF THE DRAWINGS

The invention will now be explained in detail by description of different embodiments of the invention and with reference to the appended drawings.
Fig. 1 discloses a cross-section of a fuel component according to an embodiment of the invention in a view seen from the side.
Figs. 2-5 disclose diagrams with different examples of the material concentration of a cross-section of fuel components.
Fig. 6 discloses a perspective view of an example of a fuel rod enclosing fuel components.
Fig 7 discloses a cross-section of a tool for feeding a material for sintering.

### DETAILED DESCRIPTION OF PREFERRED EMBODIMENTS OF THE INVENTION

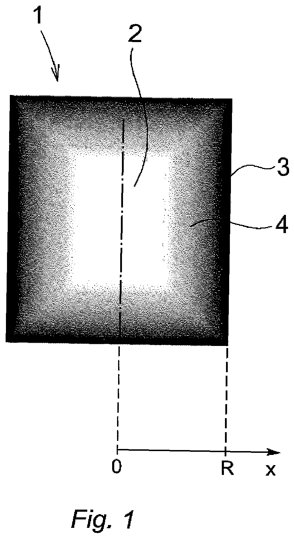

Figure 1 discloses an example of a fuel component 1, in the following denoted the component, according to an embodiment of the invention in a cross-section view seen from the side. The component 1 in figure 1 has a cylindrical shape, with the centre of the base of the cylinder in 0 and the envelop surface of the cylinder at R, along an x-axis. Also other shape of the component 1 are possible such as rectangular, square, spherical, etc.

The component 1 is adapted to be used in fission reactors and comprises a core 2 consisting of a first material and a layer 3 consisting of a second material. The core 2 of the component comprises a fissile material adapted to generate energy and neutrons, in such a way that the nuclear reaction in a fission reactor can be maintained. The layer 3 of the component encloses, in the example disclosed in figure 1, completely the core 2 and protects the core 2 from an outer surrounding by its protecting properties, such as corrosion resistance and impermeability to substances in gaseous state. The layer 3 also has ability to absorb neutrons, wherein the generated energy in the component is reduced. Preferably, the neutron absorbing substance of the layer 3 consists of a burnable neutron absorber, such as boron or gadolinium.

The component 1 is manufactured by means of sintering in such a way that an intermediate layer 4 is formed between the core 2 and the layer 3. The intermediate layer 4 comprises both the first material and the second material. The intermediate layer 4 has a material gradient, which comprises a decrease of the concentration of a first material from the core 2 to the layer 3 and an increase of the concentration of the second material from the core 2 to the layer 3. The intermediate layer 4 forms a transition between the core 2 and the layer 3, such that the material properties of the first material is transferred into the properties of the second material, and vice versa. Thereby a good adhesion between the core 2 and the layer 3 is created.

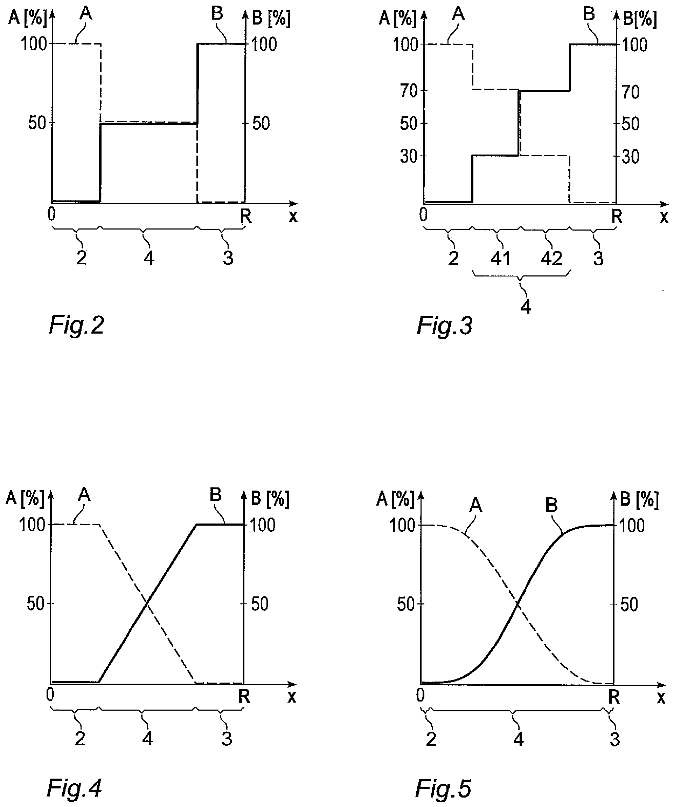

Figure 2 to 5 disclose examples of the material concentration of a cross-section of a fuel component. The x-axis of the figures is a dimensional axis, where 0 denotes the centre of the component and R denotes the outer periphery of the component. The y-axis of the figures denotes the material concentration for the component in percent for the first material, here denoted A and marked with a dotted line, and the second material, here denoted B and marked with a solid line. In the figures, the core 2, the intermediate layer 4 and the layer 3 are designated along the x-axis of the figures.

Figure 2 discloses an example of a material concentration variation within a fuel component, where the intermediate layer 4 between the core 2 and the layer 3 has a material gradient that comprises a step-by-step decrease of the concentration of a first material from the core 2 to the layer 3, and a step-by-step increase of the concentration of a second material from the core 2 to the layer 3. In the example in figure 2, a decrease of the concentration of the first material from the core 2 to the intermediate layer 4 occurs in a step-by-step manner, where the concentration of the first material decreases from essentially 100 % in the core 2 to essentially 50 % in the intermediate layer 4. The concentration of the first material is constant within the intermediate layer 4. Furthermore, a decrease of the concentration of the first material from the intermediate layer 4 to the layer 3 occurs step-by-step from essentially 50 % to essentially 0 %. On the other way around, an increase of a concentration of the second material from the core 2 to the intermediate layer 4 occurs in a step-by-step manner, where the concentration of the second material increases from essentially 0 % in the core 2 to essentially 50 % in the intermediate layer 4. The concentration of the second material is constant within the intermediate layer 4. Furthermore, an increase of the concentration of the second material from the intermediate layer 4 to the layer 3 occurs step-by-step from essentially 50 % to essentially 100%.

Figure 3 discloses in the same way as figure 2 an example of a step-by-step material concentration variation within a fuel component, with the difference that the intermediate layer 4 comprises two concentration area, a first concentration area 41 and a second concentration area 42, with different concentrations of the first material and the second material. The concentration of the first material and the second material is constant within the first concentration area 41 and the second concentration area 42. In the example in figure 3, a decrease in the concentration of the first material from the core 2 to the intermediate layer 4 occurs in a step-by-step manner, where the concentration of the first material decreases from essentially 100 % in the core 2 to essentially 70 % in the first concentration area 41 of the intermediate layer 4. Within the intermediate layer 4 a step-by-step decrease of the concentration of the first material from the first concentration area 41 to the second concentration area 42 occurs, from essentially 70 % to essentially 30 %. It occurs a step-by-step decrease of the concentration of the first material from the second concentration area 42 of the intermediate layer 4 to the layer 3, from essentially 30 % to essentially 0%. On the other way around, an increase of the concentration of the second material from the core 2 to the intermediate layer 4 occurs.

Figure 4 discloses an example of a material concentration variation within a fuel component, where the intermediate layer 4 between the core 2 and the layer 3 has a material gradient that comprises a successive decrease of the concentration of a first material from the core 2 to the layer 3, and a successive increase of the concentration of a second material from the core 2 to the layer 3. Within the intermediate layer 4, from the core 2 to the layer 3, a constant proportional decrease of the concentration of the first material occurs, from essentially 100 % to essentially 0 %. On the other way around, an increase of the concentration of the second material within the intermediate layer 4, from the core 2 to the layer 3 occurs, from essentially 0 % to essentially 100%.

Figure 5 discloses an example of a material concentration variation within a fuel component, where the intermediate layer 4 between the core 2 and the layer 3 has a material gradient that comprises a successive decrease of the concentration of a first material from the core 2 to the layer 3, and a successive increase of the concentration of a second material from the core 2 to the layer 3. In the example in figure 5, a decrease of the concentration of the first material, from the core 2 to the intermediate layer 4, occurs in a successive manner. Within the intermediate layer 4 occurs a gradual decrease of a concentration of the first material, from essentially 100 % to essentially 0 %. The transition between the core 2 and the layer 3 can for example occur in a non-linear way. On the other way around, an increase of the concentration of the second material from the core 2 occurs. In the disclosed example, the intermediate layer 4 constitutes the main part of the component while the core 2 and the layer 3 constitute a minor part of the component.

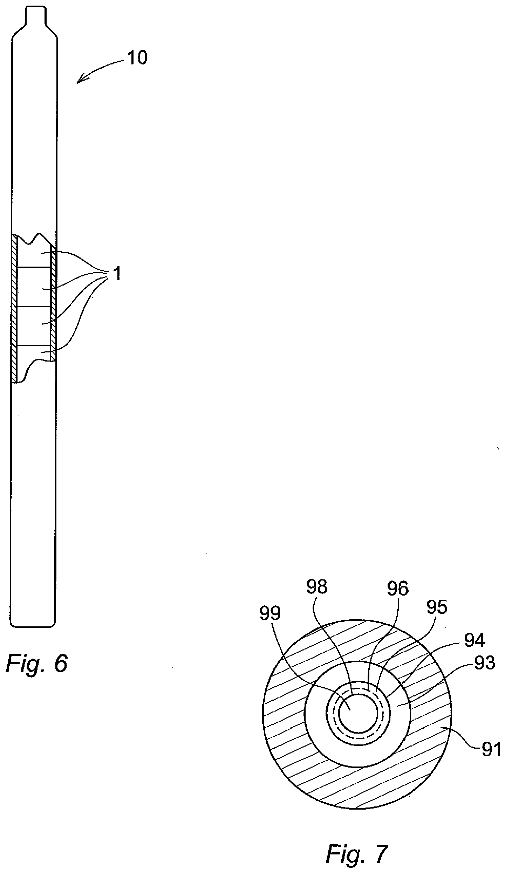

Figure 6 discloses a perspective view of an example of a fuel rod with a cladding tube 10 enclosing the fuel components 1 of the here described type. The cladding tube 10 of the fuel rod comprises an interior that is disclosed by a limited cut out. A plurality of cladding tubes 10 enclosing fuel components 1 are placed in a fixture and form a fuel assembly, not disclosed in the figure, adapted to be irradiated in a fission reactor. The cladding tube 10 consists of a corrosion resistant alloy with a low neutron absorption cross-section, such as a zirconium alloy. The function of the cladding tube 10 is to enclose the fuel components 1 and thereby prevent interaction between an outer surrounding and the fissile substance in the core 2 of the fuel component. The cladding tube 10 can be pressurized with a gas, such as helium, with the purpose of increasing the heat transfer capability between the components 1 and the cladding tube 10.

Figure 7 discloses a cros-section of an example of a tool for manufacturing the fuel component. The disclosed tool can be used for any suitable sintering method for manufacturing of the fuel component. Examples of suitable sintering methods that can be used for the invention are classical sinter technique, sintering at atmospheric pressure and elevated temperatures, Cold Isostatic Pressing, Hot Isostatic Pressing, Spark Plasma Sintering, etc.

The tool for the method comprises a tool part with a space adapted to be fed with material for the sintering. The tool part comprises a surrounding element 91. The surrounding element 91 encloses the above mentioned space. The space of the tool is divided by an inner pipe 98 which creates an inner part 99, in which the first material is fed that after sintering forms the core 2 of the component. The space of the tool is also divided by an outer pipe 94, which creates an outer part 93, in which the second material is fed that after sintering forms the layer 3 of the component. Between the outer tube 94 and the inner tube 98 an intermediate part 95 is formed, in which a mixture of the first material and the second material can be fed that after sintering forms the intermediate layer 4 of the component. With such a configuration of the tool, for example a component with the material concentration variation in figure 2 can be achieved.

In the example in figure 7, the intermediate part 95 is divided into divisions of an intermediate pipe 96. The divisions in the intermediate part 95 are fed with mixture of different proportions between concentration of the first material and the second material. The mixtures can be arranged in such a way that the layer 3 formed after sintering receives a material gradient that comprises a decrease of the concentration of the first material from the core 2 to the layer 3, and an increase of the concentration of the second material from the core 2 to the layer 3, for example such as disclosed in figure 3.

By means of the above mentioned vibration of the first and the second material, the material concentration variation as shown in figure 4 and figure 5 can be achieved by means of the tool configuration as shown in figure 7.

In an embodiment of the invention, the disclosed pipes 94, 96, 98 in figure 7 are withdrawn from the space of the tool, wherein the electrodes are connected to the electrical source 100 and electrical current is conducted through the fed material in the space of the tool, which sinter together the material in the space of the tool to the fuel component. Alternatively the material in the space of the tool can, before sintering together, be further brought together by means of vibrating the space of a tool.

In an embodiment of the invention, the disclosed pipes 94, 96, 98 in figure 7 comprise a material that is evaporated during the sintering process. Thereby the pipes 94, 96, 98 can be maintained in the space of the tool during the sintering process without affecting the ceramic composition of the fuel component.

According to an embodiment of the invention, the disclosed pipes 94, 96, 98 in figure 7 are positioned so that a distance to the bottom of the space of the tool is formed. Thereby the second material can be fed to the space of the tool so that it completely encloses the first material.

The invention is not limited to the disclosed embodiments but can be modified and varied within the scope of the proceeding claims.

## Claims

1. Fuel component (1) adapted to be used in fission reactors, comprising a core (2) consisting of a first material, and a layer (3) consisting of a second material,
wherein the layer (3) at least partly encloses the core (2), wherein the first material comprises a fissile substance, wherein the first material consists of at least a substance chosen from the group U, Pu, Th, UₓO_{y}, UₓN_{y}, UₓC_{y}, PuₓO_{y}, PuₓN_{y}, PuₓC_{y}, ThₓO_{y}, ThₓN_{y}, ThₓC_{y}, and mixtures thereof, and possible balance, and
wherein the fuel component (1) comprises an intermediate layer (4) between the core (2) and the layer (3),
**characterized in that** the intermediate layer (4) has material gradient that comprises a decrease of the concentration of the first material from the core (2) to the layer (3) and an increase of the concentration of the second material from the core (2) to the layer (3).

2. Fuel component (1) according to claim 1, **characterized in that** the material gradient comprises a successive decrease of the concentration of the first material from the core (2) to the layer (3) and a successive increase of the concentration of the second material from the core (2) to the layer (3).

3. Fuel component (1) according to any of claims 1 and 2, **characterized in that** the fuel component (1) is manufactured by sintering.

4. Fuel component (1) according to any of the previous claims, **characterized in that** the layer (3) is arranged to absorb neutrons.

5. Fuel component (1) according to any of the previous claims, **characterized in that** the second material consists of at least a substance chosen from the group Hf, B, ZrB₂, In, Cd, Hg, Ag, Gd, Er, BₓC_{y}, BₓN_{y}, BₓO_{y}, and mixtures thereof, and possible balance.

6. Fuel component (1) according to any of the previous claims, **characterized in that** the layer (3) is arranged to protect the core (2) from an outer surrounding.

7. Fuel component (1) according to any of the previous claims, **characterized in that** the layer (3) is essentially impermeable to substance in gaseous state, at least helium.

8. Fuel component (1) according to any of the previous claims, **characterized in that** the layer (3) is essentially corrosion resistant in an environment of a fission reactor.

9. Fuel component (1) according to any of the previous claims, **characterized in that** the layer (3) has a porosity with a total pore volume that is greater than or equal to zero, and that the core (2) has a porosity with a total pore volume that is greater than zero, wherein the pore volume of the porosity in the layer (3) is considerably less than the pore volume of the porosity in the core (2).

10. Fuel component (1) according to any of the previous claims, **characterized in that** the layer (3) comprises at least one of metallic material and a ceramic material.

11. Fuel component (1) according to any of the previous claims, **characterized in that** the layer (3) consists of at least a substance chosen from the group of Ti, Zr, Al, Fe, Cr, Ni, SiC, SiN, ZrO₂, Al₂O₃, and mixtures of thereof, and possible balance.

12. Fuel component (1) according to any of the previous claims, **characterized in that** the layer (3) completely encloses the core (2).

13. Method for manufacturing a fuel component according to any of the claims 1-12, wherein the method comprises the steps of:
feeding the first material and the second material to a space of a tool in such a way that the second material at least partly encloses the first material,
sintering together the first and the second material to the fuel component, wherein an intermediate layer is formed between the core and the layer, and wherein the intermediate layer has a material gradient that comprises a decrease of the concentration of the first material from the core to the layer and an increase of the concentration of the second material from the core to the layer.

14. Method according to claim 13, wherein when feeding the first material and the second material an intermediate zone is formed between an inner part of the space and an outer part of the space, and wherein the intermediate zone comprises a decrease of the concentration of the first material from the inner part of the space to the outer part of the space and an increase of the concentration of the second material from the inner part of the space to the outer part of the space.

15. Method according to claim 14, wherein the space is vibrated in such a way that the first material and the second material are brought together and form the intermediate zone.

## Patentansprüche

1. Brennelement (1) zur Verwendung in Kernreaktoren, umfassend einen aus einem ersten Material bestehenden Kern (2) und eine aus einem zweiten Material bestehende Schicht (3),
wobei die Schicht (3) zumindest teilweise den Kern (2) umschließt, wobei das erste Material einen spaltbaren Stoff umfasst, wobei das erste Material aus mindestens einem Stoff besteht, gewählt aus der Gruppe U, Pu, Th, UₓO_{y}, UₓN_{y}, UₓC_{y}, PuₓO_{y}, PuₓN_{y}, PuₓC_{y}, ThₓO_{y}, ThₓN_{y}, ThₓC_{y} sowie deren Mischungen und mögliche Gleichgewichte, und
wobei das Brennelement (1) eine Zwischenschicht (4) zwischen dem Kern (2) und der Schicht (3) umfasst,
**dadurch gekennzeichnet, dass** die Zwischenschicht (4) einen Materialgradienten aufweist, der eine Verringerung der Konzentration des ersten Materials von dem Kern (2) zu der Schicht (3) und eine Erhöhung der Konzentration des zweiten Materials von dem Kern (2) zu der Schicht (3) umfasst.

2. Brennelement (1) nach Anspruch 1, **dadurch gekennzeichnet, dass** der Materialgradient eine sukzessive Verringerung der Konzentration des ersten Materials von dem Kern (2) zu der Schicht (3) und eine sukzessive Erhöhung der Konzentration des zweiten Materials von dem Kern (2) zu der Schicht (3) umfasst.

3. Brennelement (1) nach einem der Ansprüche 1 und 2, **dadurch gekennzeichnet, dass** das Brennelement (1) durch Sintern hergestellt ist.

4. Brennelement (1) nach einem der vorangehenden Ansprüche, **dadurch gekennzeichnet, dass** die Schicht (3) zur Absorption von Neutronen ausgelegt ist.

5. Brennelement (1) nach einem der vorangehenden Ansprüche, **dadurch gekennzeichnet, dass** das zweite Material aus mindestens einem Stoff besteht, gewählt aus der Gruppe Hf, B, ZrB₂, In, Cd, Hg, Ag, Gd, Er, BₓC_{y}, BₓN_{y}, BₓO_{y} sowie deren Mischungen und mögliche Gleichgewichte.

6. Brennelement (1) nach einem der vorangehenden Ansprüche, **dadurch gekennzeichnet, dass** die Schicht (3) zum Schutz des Kerns (2) vor einer äußeren Umgebung ausgelegt ist.

7. Brennelement (1) nach einem der vorangehenden Ansprüche, **dadurch gekennzeichnet, dass** die Schicht (3) im Wesentlichen undurchlässig gegenüber gasförmigen Stoffen ist, zumindest gegenüber Helium.

8. Brennelement (1) nach einem der vorangehenden Ansprüche, **dadurch gekennzeichnet, dass** die Schicht (3) im Wesentlichen in der Umgebung eines Kernreaktors korrosionsbeständig ist.

9. Brennelement (1) nach einem der vorangehenden Ansprüche, **dadurch gekennzeichnet, dass** die Schicht (3) eine Porosität mit einem Gesamtporenvolumen aufweist, das größer oder gleich Null ist, und dass der Kern (2) eine Porosität mit einem Gesamtporenvolumen aufweist, das größer als Null ist, wobei das Porenvolumen der Porosität in der Schicht (3) erheblich geringer ist als das Porenvolumen der Porosität in dem Kern (2).

10. Brennelement (1) nach einem der vorangehenden Ansprüche, **dadurch gekennzeichnet, dass** die Schicht (3) ein metallisches Material oder/und ein keramisches Material umfasst.

11. Brennelement (1) nach einem der vorangehenden Ansprüche, **dadurch gekennzeichnet, dass** die Schicht (3) aus mindestens einem Stoff besteht, gewählt aus der Gruppe Ti, Zr, Al, Fe, Cr, Ni, SiC, SiN, ZrO₂, Al₂O₃ sowie deren Mischungen und mögliche Gleichgewichte.

12. Brennelement (1) nach einem der vorangehenden Ansprüche, **dadurch gekennzeichnet, dass** die Schicht (3) den Kern (2) vollständig umschließt.

13. Verfahren zur Herstellung eines Brennelements nach einem der Ansprüche 1-12, wobei das Verfahren die folgenden Schritte umfasst:
Zuführen des ersten Materials und des zweiten Materials in den Raum eines Werkzeugs, derart, dass das zweite Material zumindest teilweise das erste Material umschließt,
gemeinsames Sintern des ersten und des zweiten Materials zu dem Brennelement, wobei eine Zwischenschicht zwischen dem Kern und der Schicht gebildet wird und wobei die Zwischenschicht einen Materialgradienten aufweist, der eine Verringerung der Konzentration des ersten Materials von dem Kern zu der Schicht und eine Erhöhung der Konzentration des zweiten Materials von dem Kern zu der Schicht umfasst.

14. Verfahren nach Anspruch 13, wobei beim Zuführen des ersten Materials und des zweiten Materials ein Zwischenbereich zwischen einem inneren Teil des Raums und einem äußeren Teil des Raums gebildet wird und wobei der Zwischenbereich eine Verringerung der Konzentration des ersten Materials von dem inneren Teil des Raums zu dem äußeren Teil des Raums und eine Erhöhung der Konzentration des zweiten Materials von dem inneren Teil des Raums zu dem äußeren Teil des Raums umfasst.

15. Verfahren nach Anspruch 14, wobei der Raum so vibrieren gelassen wird, dass das erste Material und das zweite Material zusammengebracht werden und den Zwischenbereich bilden.

## Revendications

1. Composant combustible (1) adapté pour être utilisé dans des réacteurs de fission, comprenant un coeur (2) constitué d'un premier matériau, et une couche (3) constituée d'un deuxième matériau,
dans lequel la couche (3) encloisonne au moins partiellement le coeur (2),
dans lequel le premier matériau comprend une substance fissile,
dans lequel le premier matériau comprend au moins une substance choisie dans le groupe comprenant U, Pu, Th, UₓO_{y}, UₓN_{y}, UₓC_{y}, PuₓO_{y}, PuₓN_{y}, PuₓC_{y}, ThₓO_{y}, ThₓO_{y}, ThₓN_{y}, ThₓC_{y}, et des mélanges de ceux-ci, et un complément éventuel, et
dans lequel le composant combustible (1) comprend une couche intermédiaire (4) entre le coeur (2) et la couche (3),
**caractérisé en ce que** la couche intermédiaire (4) a un gradient de matériau qui comprend une diminution de la concentration du premier matériau, du coeur (2) à la couche (3), et une augmentation de la concentration du deuxième matériau, du coeur (2) à la couche (3).

2. Composant combustible (1) selon la revendication 1, **caractérisé en ce que** le gradient de matériau comprend une diminution successive de la concentration du premier matériau, du coeur (2) à la couche (3), et une augmentation successive de la concentration du deuxième matériau, du coeur (2) à la couche (3).

3. Composant combustible (1) selon l'une quelconque des revendications 1 et 2, **caractérisé en ce que** le composant combustible (1) est fabriqué par frittage.

4. Composant combustible (1) selon l'une quelconque des revendications précédentes, **caractérisé en ce que** la couche (3) est agencée de manière à absorber les neutrons.

5. Composant combustible (1) selon l'une quelconque des revendications précédentes, **caractérisé en ce que** le deuxième matériau est constitué d'au moins d'une substance choisie dans le groupe Hf, B, ZrB₂, In, Cd, Hg, Ag, Gd, Er, BₓC_{y}, BₓN_{y}, BₓO_{y}, et des mélanges de ceux-ci, et d'un complément éventuel.

6. Composant combustible (1) selon l'une quelconque des revendications précédentes, **caractérisé en ce que** la couche (3) est agencée de manière à protéger le coeur (2) vis-à-vis d'un environnement extérieur.

7. Composant combustible (1) selon l'une quelconque des revendications précédentes, **caractérisé en ce que** la couche (3) est pratiquement imperméable à une substance à l'état gazeux, au moins à l'hélium.

8. Composant combustible (1) selon l'une quelconque des revendications précédentes, **caractérisé en ce que** la couche (3) est pratiquement résistante à la corrosion dans l'environnement d'un réacteur de fission.

9. Composant combustible (1) selon l'une quelconque des revendications précédentes, **caractérisé en ce que** la couche (3) a une porosité avec un volume total de pores qui est supérieur ou égal à zéro, et **en ce que** le coeur (2) a une porosité avec un volume total de pores qui est supérieur à zéro, dans lequel le volume de pores de la porosité dans la couche (3) est considérablement inférieur au volume de pores de la porosité dans le coeur (2).

10. Composant combustible (1) selon l'une quelconque des revendications précédentes, **caractérisé en ce que** la couche (3) comprend au moins un matériau métallique et un matériau céramique.

11. Composant combustible (1) selon l'une quelconque des revendications précédentes, **caractérisé en ce que** la couche (3) est constituée d'au moins d'une substance choisie dans le groupe de Ti, Zr, Al, Fe, Cr, Ni, SiC, SiN, ZrO₂, Al₂O₃, et des mélanges de ceux-ci, et d'un complément éventuel.

12. Composant combustible (1) selon l'une quelconque des revendications précédentes, **caractérisé en ce que** la couche (3) encloisonne complètement le coeur (2).

13. Procédé pour fabriquer un composant combustible selon l'une quelconque des revendications 1 à 12, lequel procédé comprend les étapes suivantes :
introduction du premier matériau et du deuxième matériau dans un espace d'un outil de telle sorte que le deuxième matériau encloisonne au moins partiellement le premier matériau,
frittage des premier et deuxième matériaux ensemble en le composant combustible, dans lequel une couche intermédiaire est formée entre le coeur et la couche, et dans lequel la couche intermédiaire a un gradient de matériau qui comprend une diminution de la concentration du premier matériau, du coeur à la couche, et une augmentation de la concentration du deuxième matériau, du coeur à la couche.

14. Procédé selon la revendication 13, dans lequel, lors de l'introduction du premier matériau et du deuxième matériau, une zone intermédiaire est formée entre la partie intérieure de l'espace et une partie extérieure de l'espace, et dans lequel la zone intermédiaire comprend une diminution de la concentration du premier matériau, de la partie intérieure de l'espace à la partie extérieure de l'espace, et une augmentation de la concentration du deuxième matériau, de la partie intérieure de l'espace à la partie extérieure de l'espace.

15. Procédé selon la revendication 14, dans lequel l'espace est soumis à des vibrations de façon que le premier matériau et le deuxième matériau soient portés ensemble et forment la zone intermédiaire.
